# FASCICULE DE BREVET EUROPEEN

(11) **EP 2 653 937 B1**
(45) Date de publication et mention de la délivrance du brevet: **12.07.2017**
(21) Numéro de dépôt: 12164533.7
(22) Date de dépôt: 18.04.2012
(51) Int. Cl.: G04B 21/00, G04B 37/08, G04B 37/10, G04B 23/02, G04B 3/00, G04B 21/14, F16J 15/02

(54) **Dispositif d'étanchéité pour répétition minutes**
Abdichtvorrichtung für Minuten-Repetierwerk
Sealing device for minute repeater

(43) Date de publication de la demande: 23.10.2013
(73) Titulaire: Montres Breguet SA, 1344 L'Abbaye (CH)
(72) Inventeur: Dupuis, Frédéric, 2300 La Chaux-de-Fonds (CH)
(74) Mandataire: Giraud, Eric

(56) Documents cités:
- EP-A1- 0 443 086
- EP-A1- 1 739 509
- EP-A2- 0 869 412
- WO-A1-00/36473
- WO-A2-2006/037739
- CH-A5- 696 504

## Description

### Domaine de l'invention

L'invention concerne un dispositif d'étanchéité pour un mécanisme de répétition minutes d'une pièce d'horlogerie, ledit dispositif comportant une targette de commande de sonnerie mobile dans un boîtier entre une position de repos et au moins une position de traction, ladite targette étant guidée dans au moins une ouverture dudit boîtier, où ledit boîtier comporte un siège pour la réception en appui étanche, quand ladite targette est dans ladite position de repos, d'au moins un joint d'étanchéité statique monté de façon étanche sur ladite targette et mobile avec cette dernière, et où ledit joint d'étanchéité statique est à distance dudit siège quand ladite targette est dans une dite position de traction pour une manoeuvre de commande de sonnerie.

L'invention concerne encore un mécanisme de répétition minutes d'une pièce d'horlogerie comportant au moins un mécanisme de commande de sonnerie actionnable par une traction, dans une position de traction, d'une targette que comporte un tel dispositif d'étanchéité.

L'invention concerne encore une pièce d'horlogerie comportant au moins un tel mécanisme de répétition minutes.

L'invention concerne le domaine des pièces d'horlogerie à complications commandées par des tiges de commande ou des leviers extérieurs à la carrure de la pièce d'horlogerie. Plus particulièrement, elle concerne le domaine des pièces d'horlogerie à répétition minutes commandée par une targette.

### Arrière-plan de l'invention

Certains mécanismes horlogers nécessitent un apport d'énergie pour leur fonctionnement, comme un barillet ou un mécanisme de sonnerie, qui est généralement procuré, de façon quasi-instantanée, par la manoeuvre d'un levier, ou d'une targette, ou d'une tige, avec une course angulaire ou linéaire assez importante en regard du volume de la pièce d'horlogerie.

Un tel composant de manoeuvre comporte nécessairement une partie extérieure à la carrure de la pièce d'horlogerie, pour la préhension par l'utilisateur. Ce composant agit sur un mécanisme interne, dans une zone étanche et protégée contre l'humidité et les pollutions par poussières, sable, ou autre. Un mécanisme sans contact comme un organe de commande magnétique n'est généralement pas approprié à la densité d'énergie à transmettre, et peut de plus générer des perturbations de marche indésirables. Il est donc nécessaire d'équiper la pièce d'horlogerie de moyens d'étanchéité efficaces, à la zone frontière entre la partie interne et la partie externe du mécanisme.

Le document EP 0 443 086 au nom de IWC décrit l'agencement classique d'une targette périphérique avec protection par joint d'étanchéité.

Usuellement cette étanchéité est réalisée par un ou plusieurs joints montés en série, tel que connu du document EP 1 739 509 au nom de MONTRES BREGUET SA ou du document EP 0 869 412 au nom de KELEK SA, dans lequel une targette est poussée par le talon d'un glissoir dans une chambre extérieure où l'eau peut pénétrer. Cette targette est étanche et placée entre cette chambre extérieure et une cage d'étanchéité interne où la targette pousse un levier à l'intérieur de la montre. Des moyens d'étanchéité empêchent l'entrée d'eau dans la chambre interne. La targette comporte un poussoir à joint d'étanchéité et ressort de rappel, et dont la translation d'une tige de ce poussoir assure la transmission de mouvement.

De tels joints travaillent au cisaillement lors du coulissement d'une tige de targette. Même si ces joints sont dupliqués, leur usure est simultanée. Ces joints, conçus pour une étanchéité lors du fonctionnement et d'un mouvement de traction ou de poussée d'une targette, ne sont pas prévus spécifiquement pour la protection en position fermée de repos, qui est la plus fréquente.

Le document WO 2006/037739 au nom de AFFOLTER GUYOT décrit un dispositif de commande qui comporte une targette mobile en translation en périphérie de boîte, un plateau pivotant dans la boîte et relié cinématiquement à la targette (notamment par une goupille poussée par un bec de la targette), et un bras articulé autour d'un autre axe que celui du plateau. Ce bras articulé a une première extrémité pivotante sur le plateau au niveau d'un axe excentré, et une deuxième extrémité fixée sur une pièce pivotante dans le mécanisme.

Le document WO 00/36473 au nom de BUENTER SANZ MULET décrit un organe de commande avec un coulisseau extérieur relié à un coulisseau intérieur articulé à un piston d'actionnement qui traverse une paroi interne étanche grâce à un dispositif d'étanchéité et qui coopère avec une crémaillère du mécanisme interne à la boîte.

### Résumé de l'invention

L'invention se propose de pallier les limites de l'art antérieur en proposant un mécanisme de commande externe simple et fiable étanche à l'humidité et aux poussières, aussi bien quand le mécanisme est au repos, que quand il fonctionne.

A cet effet, l'invention concerne un dispositif d'étanchéité pour un mécanisme de répétition minutes d'une pièce d'horlogerie, ledit dispositif comportant une targette de commande de sonnerie mobile dans un boîtier entre une position de repos et au moins une position de traction, ladite targette étant guidée dans au moins une ouverture dudit boîtier, où ledit boîtier comporte un siège pour la réception en appui étanche, quand ladite targette est dans ladite position de repos, d'au moins un joint d'étanchéité statique monté de façon étanche sur ladite targette et mobile avec cette dernière, et où ledit joint d'étanchéité statique est à distance dudit siège quand ladite targette est dans une dite position de traction pour une manoeuvre de commande de sonnerie, caractérisé en ce que ladite targette comporte une surface d'appui qui pousse ledit joint d'étanchéité statique et le comprime sur ledit siège quand ladite targette est dans ladite position de repos, sous l'action de moyens de rappel élastique que comporte ledit dispositif et qui exercent sur ladite targette un effort tendant à la ramener vers sa dite position de repos.

Selon une caractéristique de l'invention, ledit boîtier comporte au moins une chambre dont une paroi comporte ladite ouverture, ladite chambre limitant la course d'au moins un joint d'étanchéité en coulissement dans lequel coulisse de façon étanche ladite targette et qui est en appui étanche sur au moins une surface intérieure de ladite chambre.

L'invention concerne encore un mécanisme de répétition minutes d'une pièce d'horlogerie comportant au moins un mécanisme de commande de sonnerie actionnable par une traction, dans une position de traction, d'une targette que comporte un tel dispositif d'étanchéité, caractérisé en ce qu'il comporte des moyens de réception dudit boîtier pour la fixation ou le soudage de tout ou partie de ce dernier.

L'invention concerne encore une pièce d'horlogerie comportant au moins un tel mécanisme de répétition minutes, caractérisé en ce qu'elle comporte des moyens d'appui ou/et d'articulation d'un levier de commande pour la manoeuvre de ladite targette, et caractérisée en ce qu'elle comporte une carrure comportant des moyens de réception dudit boîtier pour la fixation ou le soudage de tout ou partie de ce dernier.

### Description sommaire des dessins

D'autres caractéristiques et avantages de l'invention apparaîtront à la lecture de la description détaillée qui va suivre, en référence aux dessins annexés où :

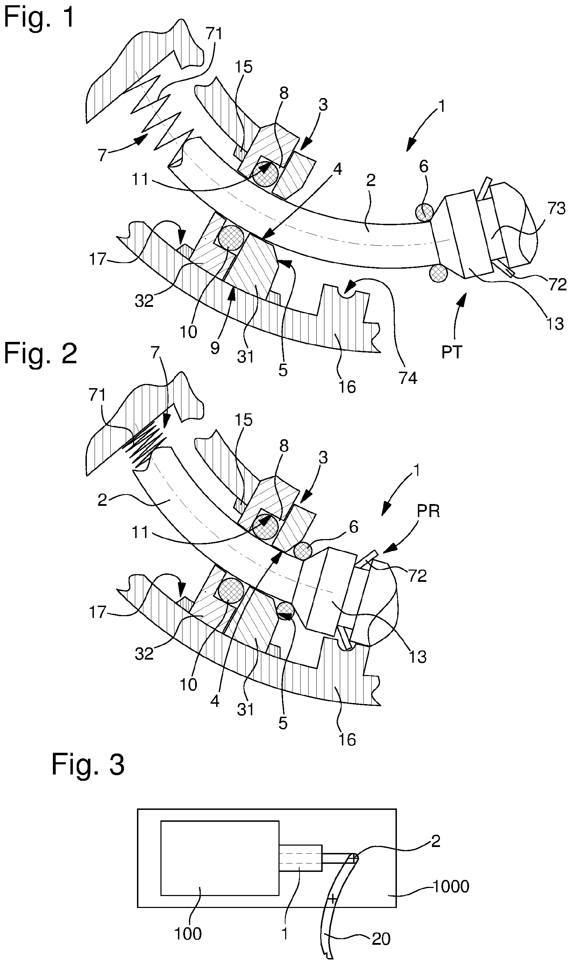

- la figure 1 représente, de façon schématisée et en coupe dans un plan passant par la partie médiane d'une targette qu'il comporte, un dispositif d'étanchéité pour un mécanisme de répétition minutes selon l'invention, dans une position de traction de cette targette pour une commande de sonnerie ;
- la figure 2 représente le même mécanisme dans une position de repos ;
- la figure 3 est un schéma-blocs d'une pièce d'horlogerie avec un mécanisme de répétition minutes et un dispositif d'étanchéité selon l'invention.

### Description détaillée des modes de réalisation préférés

L'invention concerne le domaine des pièces d'horlogerie à complications commandées par des tiges de commande ou des leviers extérieurs à la carrure de la pièce d'horlogerie. Plus particulièrement, elle concerne le domaine des pièces d'horlogerie à répétition minutes commandée par une targette.

L'invention est décrite ici pour ce seul cas particulier d'application, mais il est facile à l'horloger de la transposer pour tout autre mécanisme à tige ou à levier mobile entre une position de repos et une ou plusieurs positions d'activation.

L'invention concerne un dispositif d'étanchéité 1 pour une pièce d'horlogerie, et notamment pour un mécanisme de répétition minutes.

Ce dispositif 1 comporte une targette 2 de commande de sonnerie mobile dans un boîtier 3 entre une position de repos PR et au moins une position de traction PT. La targette 2 est de préférence guidée dans au moins une ouverture 4 du boîtier 3.

Selon l'invention le boîtier 3 comporte un siège 5 pour la réception en appui étanche, quand la targette 2 est dans la position de repos PR, d'au moins un joint d'étanchéité statique 6 monté de façon étanche sur la targette 2 et mobile avec cette dernière. Ce joint d'étanchéité statique 6 est à distance du siège 5 quand la targette 2 est dans une position de traction PT pour une manoeuvre de commande de sonnerie.

Dans une réalisation particulière et préférée, le joint d'étanchéité statique 6 est monté de façon étanche en position fixe sur la targette 2.

De préférence, la targette 2 comporte une surface d'appui 12 qui pousse le joint d'étanchéité statique 6 et le comprime sur le siège 5 quand la targette 2 est dans la position de repos PR, sous l'action de moyens de rappel élastique 7 que comporte le dispositif 1 et qui exercent sur la targette un effort tendant à la ramener vers sa position de repos PR.

De façon avantageuse, le dispositif 1 selon l'invention combine ce joint d'étanchéité statique 6, qui est conçu pour protéger le mécanisme de commande de sonnerie, et tout le contenu de la pièce d'horlogerie, quand la targette 2 est en position de repos PR, avec un joint d'étanchéité assurant la protection lors du déplacement de la targette 2. Ainsi, le boîtier 3 comporte au moins une chambre 8, et de préférence une paroi 9 de cette chambre 8 comporte l'ouverture 4. La chambre 8 limite la course d'un joint d'étanchéité en coulissement 10 dans lequel coulisse de façon étanche la targette 2, et qui est en appui étanche sur au moins une surface intérieure 11 de la chambre 8.

Dans une version préférée, tel que représentée sur les figures, mais non limitative, la chambre 8 immobilise le joint d'étanchéité en coulissement 10.

Dans une réalisation préférée de l'invention, le siège 5 est conique. Il peut prendre d'autres géométries, en calotte sphérique, ou encore avec un profil courbe particulier assurant la plus grande surface de contact entre le siège 5 et le joint d'étanchéité statique 6 lors de l'écrasement de ce dernier. En effet, la targette 2 comporte une surface d'appui 12 qui pousse le joint d'étanchéité statique 6 et le comprime sur le siège 5 quand la targette 2 est dans la position de repos PR, et de préférence sous l'action de moyens de rappel élastique 7, que comporte le dispositif 1, et qui exercent sur la targette un effort tendant à la ramener vers sa position de repos PR.

Dans une réalisation avantageuse, surtout quand le siège 5 est conique, la surface d'appui 12 est conique.

Dans une réalisation particulière illustrée par les figures, la targette 2 comporte une tête 13 porteuse d'une telle surface d'appui 12. Dans une première variante visible sur les figures, cette tête 13 comporte des moyens de rappel élastique 7 qui coopèrent avec des moyens d'appui complémentaire 14 qui sont solidaires du boîtier 3 ou qui appartiennent au mécanisme de répétition minutes. Dans une autre variante non illustrée, selon une configuration inverse la tête 13 comporte des moyens d'appui complémentaire 14 qui coopèrent avec des moyens de rappel élastique 7 qui sont solidaires du boîtier 3 ou qui appartiennent audit mécanisme de répétition minutes.

De préférence, pour effectuer la totalité de la course de rappel de la targette 2 depuis sa position de traction TR la plus éloignée de sa position de repos PR, vers cette dernière, les moyens de rappel élastique 7 comportent au moins un ressort hélicoïdal 71 coaxial à la targette 2 pour rappeler celle-ci vers sa position de repos PR.

Dans le cas où la tête 13 coopère à l'effort de maintien en position de repos, de préférence et tel qu'illustré par les figures, les moyens de rappel élastique 7 comportent, en complément d'un tel ressort hélicoïdal 71, pour un maintien complémentaire de la targette 2 dans la position de repos PR, au moins un ressort 72 déformable élastiquement selon une direction sensiblement radiale à la targette 2. Ce ressort 72 est constitué par une rondelle Belleville, ou un circlips, ou un joint torique, ou similaire, logé dans un logement 73. Ce logement 73 appartient, selon la variante de la tête 13, que comporte, ou bien à la tête 13, ou bien au boîtier 3 ou au mécanisme de répétition minutes. Ce ressort 72 coopère avec un logement complémentaire 74 que comporte respectivement, ou bien le boîtier 3 ou le mécanisme de répétition minutes d'une part, ou bien la tête 13 d'autre part.

De préférence, pour une compacité maximale, le siège 5 est réalisé au niveau d'une paroi d'étanchéité 31 que comporte une chambre 8 du boîtier 3 dont une paroi 9 comporte l'ouverture 4. La chambre 8 qui renferme le joint d'étanchéité en coulissement 10 est avantageusement réalisée par la juxtaposition étanche d'une telle paroi d'étanchéité 31 avec une paroi arrière 32 comportant une gorge ou un logement, tel que visible sur les figures, et ce joint 10 peut porter sur une ou plusieurs des surfaces de la paroi d'étanchéité 31 ou/et de ce logement de la paroi arrière 32.

Dans une réalisation préférée, le joint d'étanchéité statique 6 est un joint torique.

Dans une réalisation préférée, le joint d'étanchéité en coulissement 10 est aussi un joint torique.

L'invention concerne encore un mécanisme de répétition minutes 100 d'une pièce d'horlogerie comportant au moins un mécanisme de commande de sonnerie actionnable par une traction, dans une position de traction PT, d'une targette 2 que comporte un dispositif d'étanchéité 1. Selon l'invention, ce mécanisme 100 comporte des moyens de réception 15 du boîtier 3 pour la fixation ou le soudage de tout ou partie de ce dernier. Un assemblage par soudage, collage, brasage, ou similaire est meilleur du point de vue étanchéité qu'un simple assemblage mécanique.

L'invention concerne encore une pièce d'horlogerie 1000 comportant au moins un tel mécanisme de répétition minutes 100. Selon l'invention, elle comporte des moyens d'appui ou/et d'articulation d'un levier de commande 20 pour la manoeuvre de la targette 2. Elle comporte une carrure 16 comportant des moyens de réception 17 du boîtier 3 pour la fixation ou le soudage, collage, brasage, ou similaire, de tout ou partie de ce dernier.

Ainsi l'invention apporte une solution simple et économique, peu encombrante, au problème de l'étanchéité d'un mécanisme de commande aussi bien en repos qu'en mouvement.

## Revendications

1. Dispositif d'étanchéité (1) pour un mécanisme de répétition minutes d'une pièce d'horlogerie, ledit dispositif (1) comportant une targette (2) de commande de sonnerie mobile dans un boîtier (3) que comporte ledit dispositif, entre une position de repos (PR) et au moins une position de traction (PT), ladite targette (2) étant guidée dans au moins une ouverture (4) dudit boîtier (3), et où ledit boîtier (3) comporte un siège (5) pour la réception en appui étanche, quand ladite targette (2) est dans ladite position de repos (PR), d'au moins un joint d'étanchéité statique (6) monté de façon étanche sur ladite targette (2) et mobile avec cette dernière, et où ledit joint d'étanchéité statique (6) est à distance dudit siège (5) quand ladite targette (2) est dans une dite position de traction (PT) pour une manoeuvre de commande de sonnerie, **caractérisé en ce que** ladite targette (2) comporte une surface d'appui agencée pour pousser ledit joint d'étanchéité statique (6) et le comprimer sur ledit siège (5) quand ladite targette (2) est dans ladite position de repos (PR), sous l'action de moyens de rappel élastique (7) que comporte ledit dispositif (1) et qui exercent sur ladite targette un effort tendant à la ramener vers sa dite position de repos (PR).

2. Dispositif d'étanchéité (1) selon la revendication 1, **caractérisé en ce que** ledit joint d'étanchéité statique (6) est monté de façon étanche en position fixe sur ladite targette (2).

3. Dispositif d'étanchéité (1) selon l'une des revendications précédentes, **caractérisé en ce que** ledit boîtier (3) comporte au moins une chambre (8) dont une paroi (9) comporte ladite ouverture (4), ladite chambre (8) limitant la course d'au moins un joint d'étanchéité en coulissement (10) dans lequel coulisse de façon étanche ladite targette (2) et qui est en appui étanche sur au moins une surface intérieure (11) de ladite chambre (8).

4. Dispositif d'étanchéité (1) selon la revendication précédente, **caractérisé en ce que** ladite chambre (8) immobilise ledit joint d'étanchéité en coulissement (10).

5. Dispositif d'étanchéité (1) selon l'une des revendications précédentes, **caractérisé en ce que** ledit siège (5) est conique.

6. Dispositif d'étanchéité (1) selon l'une des revendications précédentes, **caractérisé en ce que** ladite targette (2) comporte une tête (13) porteuse de ladite surface d'appui (12), et **en ce que** ladite tête (13), ou bien comporte lesdits moyens de rappel élastique (7) qui coopèrent avec des moyens d'appui complémentaire (14) qui sont solidaires dudit boîtier (3) ou qui appartiennent audit mécanisme de répétition minutes, ou bien comporte des moyens d'appui complémentaire (14) qui coopèrent avec lesdits moyens de rappel élastique (7) qui sont solidaires dudit boîtier (3) ou qui appartiennent audit mécanisme de répétition minutes.

7. Dispositif d'étanchéité (1) selon l'une des revendications précédentes, **caractérisé en ce que** lesdits moyens de rappel élastique (7) comportent au moins un ressort hélicoïdal (71) coaxial à ladite targette (2) pour rappeler celle-ci vers sa dite position de repos (PR).

8. Dispositif d'étanchéité (1) selon la revendication 6, **caractérisé en ce que** lesdits moyens de rappel élastique (7) comportent, pour un maintien complémentaire de ladite targette (2) dans ladite position de repos (PR), au moins un ressort (72) déformable élastiquement selon une direction sensiblement radiale à ladite targette (2) et constitué par une rondelle Belleville ou un circlips logé dans un logement (73) que comporte, ou bien ladite tête (13) d'une part, ou bien ledit boîtier (3) ou ledit mécanisme de répétition minutes d'autre part, et coopérant avec un logement complémentaire (74) que comporte respectivement, ou bien ledit boîtier (3) ou ledit mécanisme de répétition minutes d'une part, ou bien ladite tête (13) d'autre part.

9. Dispositif d'étanchéité (1) selon l'une des revendications précédentes, **caractérisé en ce que** ledit siège (5) est réalisé au niveau d'une paroi d'étanchéité (31) que comporte une chambre (8) dudit boîtier (3) dont une paroi (9) comporte ladite ouverture (4).

10. Dispositif d'étanchéité (1) selon l'une des revendications précédentes, **caractérisé en ce que** ledit joint d'étanchéité statique (6) est un joint torique.

11. Dispositif d'étanchéité (1) selon l'une des revendications précédentes, **caractérisé en ce que** ledit joint d'étanchéité en coulissement (10) est un joint torique.

12. Mécanisme de répétition minutes (100) d'une pièce d'horlogerie comportant au moins un mécanisme de commande de sonnerie actionnable par une traction, dans une position de traction (PT), d'une targette (2) que comporte un dispositif d'étanchéité (1) selon l'une des revendications précédentes, **caractérisé en ce qu'**il comporte des moyens de réception (15) dudit boîtier (3) pour la fixation ou le soudage de tout ou partie de ce dernier.

13. Pièce d'horlogerie (1000) comportant au moins un mécanisme de répétition minutes (100) selon la revendication précédente, **caractérisé en ce qu'**elle comporte des moyens d'appui ou/et d'articulation d'un levier de commande (20) pour la manoeuvre de ladite targette (2), et **caractérisée en ce qu'**elle comporte une carrure (16) comportant des moyens de réception (17) dudit boîtier (3) pour la fixation ou le soudage de tout ou partie de ce dernier.

## Patentansprüche

1. Dichtungsvorrichtung (1) für einen Minutenrepetiermechanismus eines Zeitmessgeräts, wobei die Vorrichtung (1) einen Läutwerksteuerriegel (2) umfasst, der in einem Gehäuse (3), das die Vorrichtung aufweist, zwischen einer Ruheposition (PR) und mindestens einer Zugposition (PT) beweglich ist, der Riegel (2) in mindestens eine Öffnung (4) des Gehäuses (3) geführt wird und wobei das Gehäuse (3) einen Sitz (5) für die dichte, abstützende Aufnahme, wenn der Riegel (2) in der Ruheposition (PR) ist, mindestens einer statischen Dichtung (6) aufweist, die an dem Riegel (2) auf dichte Weise montiert ist und mit diesem Letzteren beweglich ist, und wobei die statische Dichtung (6) in einem Abstand von dem Sitz (5) angeordnet ist, wenn der Riegel (2) in einer Zugposition (PT) ist, um eine Steuerbetätigung des Läutwerks vorzunehmen, **dadurch gekennzeichnet, dass** der Riegel (2) eine Abstützoberfläche aufweist, die dafür ausgelegt ist, die statische Dichtung (6) zu schieben und sie gegen den Sitz (5) zu pressen, wenn der Riegel (2) in der Ruheposition (PR) ist, unter Einwirkung elastischer Rückstellmittel (7), die die Vorrichtung (1) aufweist und die auf den Riegel eine ihn in seine Ruheposition (PR) zurückzuführen bestrebte Kraft ausüben.

2. Dichtungsvorrichtung (1) nach Anspruch 1, **dadurch gekennzeichnet, dass** die statische Dichtung (6) auf dichte Weise an einer festen Position an dem Riegel (2) montiert ist.

3. Dichtungsvorrichtung (1) nach einem der vorhergehenden Ansprüche, **dadurch gekennzeichnet, dass** das Gehäuse (3) mindestens eine Kammer (8) aufweist, deren eine Wand (9) die Öffnung (4) aufweist, wobei die Kammer (8) die Bahn mindestens einer Gleitdichtung (10) begrenzt, in der der Riegel (2) auf dichte Weise gleitet und die sich an mindestens einer inneren Oberfläche (11) der Kammer (8) auf dichte Weise abstützt.

4. Dichtungsvorrichtung (1) nach dem vorhergehenden Anspruch, **dadurch gekennzeichnet, dass** die Kammer (8) die Gleitdichtung (10) festsetzt.

5. Dichtungsvorrichtung (1) nach einem der vorhergehenden Ansprüche, **dadurch gekennzeichnet, dass** der Sitz (5) konisch ist.

6. Dichtungsvorrichtung (1) nach einem der vorhergehenden Ansprüche, **dadurch gekennzeichnet, dass** der Riegel (2) einen die Abstützoberfläche (12) tragenden Kopf (13) aufweist, und dass der Kopf (13) entweder die elastischen Rückstellmittel (7) umfasst, die mit komplementären Abstützmitteln (14) zusammenwirken, die mit dem Gehäuse (3) fest verbunden sind oder zu dem Minutenrepetiermechanismus gehören, oder komplementäre Abstützmittel (14) umfasst, die mit den elastischen Rückstellmittel (7) zusammenwirken, die mit dem Gehäuse (3) fest verbunden sind oder zu dem Minutenrepetiermechanismus gehören.

7. Dichtungsvorrichtung (1) nach einem der vorhergehenden Ansprüche, **dadurch gekennzeichnet, dass** die elastischen Rückstellmittel (7) mindestens eine zylindrische Schraubenfeder (71) umfassen, die zu dem Riegel koaxial ist, um diesen in seine Ruheposition (PR) zurückzustellen.

8. Dichtungsvorrichtung (1) nach Anspruch 6, **dadurch gekennzeichnet, dass** die elastischen Rückstellmittel (7) für einen komplementären Halt des Riegels (2) in der Ruheposition (PR) mindestens eine Feder (72) umfassen, die in einer zu dem Riegel (2) im Wesentlichen radialen Richtung elastisch verformbar ist und durch einen Belleville-Dichtungsring oder einen Sicherungsring gebildet ist, der in einem Aufnahmeraum (73) angeordnet ist, den einerseits entweder der Kopf (13) oder andererseits das Gehäuse (3) oder der Minutenrepetiermechanismus aufweist und der mit einem komplementären Aufnahmeraum (74) zusammenwirkt, den entsprechend entweder das Gehäuse (3) oder der Minutenrepetiermechanismus einerseits oder der Kopf (13) andererseits aufweist.

9. Dichtungsvorrichtung (1) nach einem der vorhergehenden Ansprüche, **dadurch gekennzeichnet, dass** der Sitz (5) auf Höhe einer Dichtungswand (31) ausgebildet ist, die eine Kammer (8) des Gehäuses (3) umfasst, wovon eine Wand (9) die Öffnung (4) aufweist.

10. Dichtungsvorrichtung (1) nach einem der vorhergehenden Ansprüche, **dadurch gekennzeichnet, dass** die statische Dichtung (6) eine O-Ring-Dichtung ist.

11. Dichtungsvorrichtung (1) nach einem der vorhergehenden Ansprüche, **dadurch gekennzeichnet, dass** die Gleitdichtung (10) eine O-Ring-Dichtung ist.

12. Minutenrepetiermechanismus (100) eines Zeitmessgeräts, der mindestens einen Läutwerksteuermechanismus umfasst, der in einer Zugposition (PT) eines Riegels (2), den eine Dichtungsvorrichtung (1) nach einem der vorhergehenden Ansprüche aufweist, durch Zug betätigbar ist, **dadurch gekennzeichnet, dass** er Mittel (15) für die Aufnahme des Gehäuses (3) umfasst, um dieses Letztere ganz oder teilweise zu befestigen oder zu verschweißen.

13. Zeitmessgerät (1000), das mindestens einen Minutenrepetiermechanismus (100) nach dem vorhergehenden Anspruch umfasst, **dadurch gekennzeichnet, dass** es Mittel zum Abstützen und/oder Anlenken eines Steuerhebels (20) für die Betätigung des Riegels (2) umfasst, und **dadurch gekennzeichnet, dass** es ein Mittelteil (16) umfasst, das Mittel (17) für die Aufnahme des Gehäuses (3) aufweist, um dieses Letztere ganz oder teilweise zu befestigen oder zu verschweißen.

## Claims

1. Sealing device (1) for a minute-repeater mechanism for a timepiece, said device (1) including a striking work control bolt (2) which can move in a case (3) included in said sealing device, between a rest position (PR) and at least one pulled-out position (PT), said bolt (2) being guided in at least one aperture (4) of said case (3) and wherein said case (3) includes a seat (5) for receiving in sealed abutment, when said bolt (2) is in said rest position (PR), at least one static sealing gasket (6) mounted in a sealed manner on said bolt (2) and moveable therewith, and wherein said static sealing gasket (6) is at a distance from said seat (5) when said bolt (2) is in a said pulled-out position (PT), for operating the striking work, **characterized in that** said bolt (2) includes an abutment surface arranged to push said static sealing gasket (6) and to compress said static sealing gasket onto said seat (5) when said bolt (2) is in said rest position (PR), under the action of an elastic return means (7) comprised in said device (1) which exerts stress on said bolt tending to return said bolt to the rest position (PR) thereof.

2. Sealing device (1) according to claim 1, **characterized in that** said static sealing gasket (6) is mounted in a sealed manner in a fixed position on said bolt (2).

3. Sealing device (1) according to one of preceding claims, **characterized in that** said case (3) includes at least one chamber (8), one wall (9) of which includes said aperture (4), said chamber (8) limiting the travel of at least one sliding sealing gasket (10) in which said bolt (2) slides in a sealed manner and which is in sealed abutment on at least one inner surface (11) of said chamber (8).

4. Sealing device (1) according to the preceding claim, **characterized in that** said chamber (8) immobilises said sliding sealing gasket (10).

5. Sealing device (1) according to one of preceding claims, **characterized in that** said seat (5) is conical.

6. Sealing device (1) according to one of preceding claims, **characterized in that** said bolt (2) includes a head (13) carrying said abutment surface (12), and **in that** said head (13) either includes an elastic return means (7) which cooperates with a complementary abutting means (14) integral with said case (3), or forms part of said minute-repeater mechanism, or includes a complementary abutting means (14) which cooperates with an elastic return means (7) integral with said case (3) or which forms part of said minute-repeater mechanism.

7. Sealing device (1) according to one of preceding claims, **characterized in that** said elastic return means (7) includes at least one helical spring (71) coaxial with said bolt (2) for returning said bolt to the rest position (PR) thereof.

8. Sealing device (1) according to claim 6, **characterized in that**, to further maintain said bolt (2) in said rest position (PR), said elastic return means (7) includes at least one spring (72), which is elastically deformable in a substantially radial direction to said bolt (2) and is formed by a Belleville spring washer or a tension washer housed in a housing (73) comprised either in said head (13) on the one hand, or said case (3) or said minute-repeater mechanism on the other hand, and cooperates with a complementary housing (74) respectively comprised either in said case (3) or said minute-repeater mechanism on the one hand, or on said head (13) on the other hand.

9. Sealing device (1) according to one of preceding claims, **characterized in that** said seat (5) is made on a sealing wall (31) comprised in a chamber (8) of said case (3), one wall (9) of which comprises said aperture (4).

10. Sealing device (1) according to one of preceding claims, **characterized in that** said static sealing gasket (6) is an O-ring joint.

11. Sealing device (1) according to one of preceding claims, **characterized in that** said sliding sealing gasket (10) is an O-ring joint.

12. Minute repeater mechanism (100) for a timepiece comprising at least one striking work control mechanism actuatable by pulling, into a pulled-out position (PT), a bolt (2) comprised in a sealing device (1) according to one of preceding claims, **characterized in that** said mechanism includes a means (15) of receiving said case (3) for securing or welding all or part of said case.

13. Timepiece (1000) comprising at least one minute-repeater mechanism (100) according to the preceding claim, **characterized in that** it includes a means of abutting and/or hinging a control lever (20) for operating said bolt (2), and **characterized in that** it includes a middle part (16) comprising a means (17) of receiving said case (3) for securing or welding all or part of said case.
